# EUROPEAN PATENT APPLICATION

(11) **EP 4 745 752 A1**
(43) Date of publication of application: **20.05.2026**
(21) Application number: 25752394.4
(22) Date of filing: 08.01.2025
(51) Int. Cl.: G06F 3/16, G06F 3/01, G06F 3/048, G10L 15/08, G10L 15/28, G06F 3/14

(54) **METHOD FOR PROVIDING USER ADAPTIVE INTERFACE AND VOICE CONTROL DEVICE FOR IMPLEMENTING SAME**

(30) Priority: 06.02.2024 KR 20240018350
(71) Applicant: LG Electronics Inc., Yeongdeungpo-gu Seoul 07336 (KR)
(72) Inventor: KIM, Sang Won, Seoul 08592 (KR); LEE, Taekyo, Seoul 08592 (KR)
(74) Representative: Schott, Jakob Valentin
(86) International application number: PCT/KR2025/000467
(87) International publication number: WO 2025/170215

(57) **Abstract**

The present invention relates to a method for providing a user adaptive interface and a voice control device for implementing same. The method for providing a user adaptive interface according to an embodiment of the present invention comprises a step in which a voice control device outputs a voice comment suitable for a user's tendency, and the voice control device or a home appliance displays the progress of the output of the voice comment.

## Description

### [Technical Field]

The present invention relates to a method for providing a user adaptive interface and a voice control device implementing the same.

### [Description of the Related Art]

Control methods for home appliances can be classified into a control method through direct human manipulation and a control method through voices. In the case of the direct manipulation, a user can control the operation of the home appliance by manipulating a remote controller, buttons or dials on the home appliance, etc. In the case of the voice control, when the user speaks a voice to the home appliance, the home appliance recognizes the voice and operates.

In addition, the voice control device can provide the user with a voice output of the home appliance control results or answers to the user's questions. In this way, the voice control device outputting the voice engages in direct conversation with the user and thus needs to operate in a manner suitable for the user.

Accordingly, the present specification describes a voice control device that operates in a user adaptive manner.

### [Disclosure]

### [Technical Problem]

The present specification is to solve the above problems and is directed to implementing a method and device that enable a user to visually check an output time of a voice comment during a process of responding to voice commands of a home appliance.

In addition, the present specification is directed to collecting a user's tendency in various ways to generate a voice guidance comment suitable for the user's tendency.

In addition, the present specification is directed to enhancing user convenience by outputting a voice guidance comment suitable for the user's tendency.

Objects of the present invention are not limited to the above objects, and other objects and advantages of the present invention that are not described can be understood by the following description and will be more clearly understood by embodiments of the present invention. In addition, it will be able to be easily seen that the objects and advantages of the present invention may be achieved by devices and combinations thereof that are described in the claims.

### [Technical Solution]

A method and device for providing a user adaptive interface according to one embodiment of the present invention includes operations and embodiments in which a voice control device outputs a voice comment suitable for a user's tendency and the voice control device or a home appliance displays an output progress of the voice comment.

A method for providing a user adaptive interface according to one embodiment of the present invention includes an operation of dividing, by a control unit of a voice control device, a first voice comment into two or more parts, a part output operation of sequentially outputting, by a voice output unit of the voice control device, an output target part among the two or more parts, a displaying operation of displaying, by the control unit, an output progress of the first voice comment on an interface unit of the voice control device simultaneously with or before or after the output of the output target part, and an operation of controlling, by the control unit, the voice output unit and the interface unit to repeat the part output operation and the display operation for each part among the remaining parts in the order of each part after the output of the output target part.

A method for providing a user adaptive interface according to another embodiment of the present invention includes an operation of dividing, by a server control unit of a server, a first voice comment into two or more parts, an operation of transmitting, by a server communication unit of the server, the divided two or more parts to a voice control device, a part output operation of sequentially outputting, by a voice output unit of the voice control device, an output target part among the two or more parts, a displaying operation of displaying, by a control unit of the voice control device, an output progress of the first voice comment on an interface unit of the voice control device simultaneously with or before or after the output of the output target part, and an operation of controlling, by the control unit, the voice output unit and the interface unit to repeat the part output operation and the display operation for each part among the remaining parts in the order of each part after the output of the output target part.

In a voice control device for providing a user adaptive interface according to one embodiment of the present invention, which provides voice recognition and a voice comment, wherein a control unit of the voice control device divides a first voice comment into two or more parts, and then a voice output unit of the voice control device performs a part output process of sequentially outputting an output target part among the two or more parts, the control unit performs a displaying process of displaying an output progress of the first voice comment on an interface unit of the voice control device simultaneously with or before or after the output of the output target part, and the control unit controls the voice output unit and the interface unit to repeat the part output process and the displaying process for each part among the remaining parts in order of each part after the output of the output target part.

### [Advantageous Effects]

According to the present invention, it is possible to implement the method and device that enables the user to visually check the output time of the voice comment through the home appliance or the voice control device.

According to the present invention, the user's tendency can be collected in various ways to generate the voice guidance comment suitable for the user's tendency, thereby enhancing user convenience.

According to the present invention, the voice guidance comment suitable for to the user's tendency can be output, thereby enhancing user convenience.

Effects of the present invention are not limited to the above effects, and various effects of the present invention can be easily derived from the configuration of the present invention.

### [BRIEF DESCRIPTION OF THE DRAWINGS]

FIG. 1 is a view illustrating the mutual operation and arrangement of a home appliance and a voice control device according to one embodiment of the present invention.
FIG. 2 is a view illustrating a configuration of the voice control device and a server according to one embodiment of the present invention.
FIG. 3 is a view illustrating a control process of an interface unit for generating and outputting a voice comment by the voice control device according to one embodiment of the present invention.
FIG. 4 is a view illustrating the interface unit of the voice control device according to one embodiment of the present invention.
FIG. 5 is a view illustrating a process of adjusting an output speed of a voice comment using user tendency information according to one embodiment of the present invention.
FIG. 6 is a view illustrating a process of selecting a chatbot based on a user's tendency according to one embodiment of the present invention.
FIG. 7 is a view illustrating a process in which a home appliance adjacent to a user outputs a voice comment of the voice control device or displays an output progress of the voice comment according to one embodiment of the present invention.

### [DETAILED DESCRIPTION OF THE INVENTION]

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

In order to clearly describe the present invention, parts not related to the description have been omitted, and the same or similar components are denoted as the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

Hereinafter, a home appliance described herein is a device including an electronic product. The home appliance may be disposed in homes, offices, or the like and moved and disposed in other locations by people.

In addition, a voice control device described in this specification is disposed in a home, office, and the like in which home appliances are disposed and is portable, and provides functions necessary to control home appliances disposed nearby by voice or to answer a user's questions.

An operating space described herein is a space (e.g., home, office, or a specific room or section unit) in which the voice control device and home appliances are disposed.

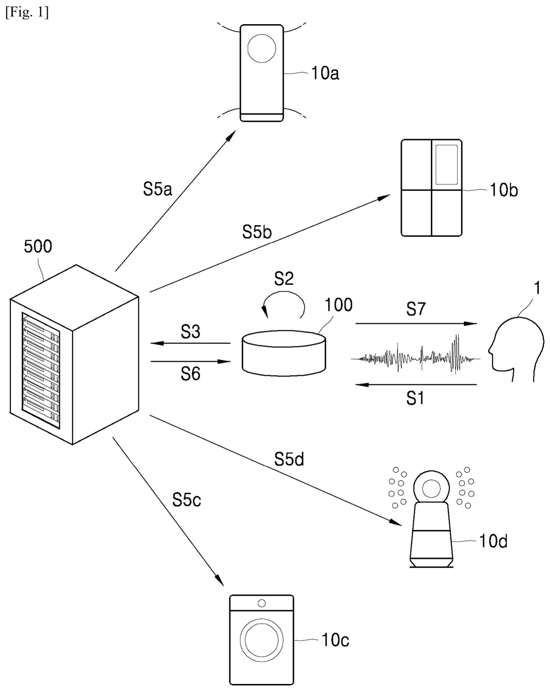

FIG. 1 is a view illustrating the mutual operation and arrangement of a home appliance and a voice control device according to one embodiment of the present invention.

A voice control device 100 is a device disposed in an operating space, such as a home, office, or the like, and receives a voice command from a user 1 (S1). When receiving the voice command, the voice control device 100 processes the voice to perform voice recognition or preprocessing, such as noise removal (S2), and transmits a preprocessed message to a server 500 (S3).

Here, the preprocessed message includes various embodiments. First, in one example, the preprocessed message is a voice file recording the voice spoken by the user 1. Next, in another example, the preprocessed message is a voice file from which ambient noise has been removed from the voice spoken by the user 1. In addition, in still another example, the preprocessed message is a text file generated by converting the voice spoken by the user 1 into text. To this end, the voice control device 100 may include a speech-to-text (STT) function.

The server 500 may perform a predetermined task on the preprocessed message and transmit the result to the corresponding home appliance 10a, 10b, 10c, and 10d (S5a, S5b, S5c, S5d). That is, the server 500 receiving the preprocessed message transmitted by the voice control device 100 performs voice recognition or processes the text file and transmits a control command to instruct the operations of the corresponding home appliances 10a, 10b, 10c, and 10d to the home appliance (S5a, S5b, S5c, S5d). In addition, the server 500 transmits a result message for the control command to the voice control device 100 (S6), and the voice control device 100 outputs the result message as a voice (S7) so that the user 1 may hear the message.

In the example of FIG. 1, when the voice command input by the user 1 is unrelated to the control of the home appliance, only operations S1/S2/S3/S6/S7 may be performed.

In addition, when the voice control device 100 may directly process the voice command input by the user 1, only operations S1/S2/S7 may be performed.

In addition, the voice control device 100 may directly transmit the control command to the home appliances 10a, 10b, 10c, and 10d independently of the server 500. In this case, the voice control device 100 may transmit the control command to the home appliances 10a, 10b, 10c, and 10d according to a protocol agreed upon with the home appliances 10a, 10b, 10c, and 10d and receive a corresponding result message.

The voice control device 100 according to the embodiment of the present invention is disposed within a home and enables voice recognition-based operations of home appliances disposed within the operating space to connect the operating space. This expands a smart home experience space of the user, enabling the user to continuously enjoy new services. The voice control device 100 according to the embodiment of the present invention may monitor home appliances disposed in a multipurpose room, a bedroom (dressing room), a kitchen, a living room/bedroom, and the like or control the operations of the home appliances.

In addition, the voice control device 100 according to the embodiment of the present invention may transmit voice data to the server 500 in real time when a voice recognition command is spoken.

In addition, the voice control device 100 according to the embodiment of the present invention may use generative artificial intelligence (AI) to provide voice recognition guidance comments suitable for the user's tendency. During this process, an interface for enabling the user to visually check the progress of the voice recognition guidance comment may be provided.

In addition, the voice control device 100 according to the embodiment of the present invention may provide long-form information to the user who prefers detailed guidance unlike the current short-form information provided.

For example, when information, such as laundry tips, recipes, and the like, is provided by voice, hyper-personalization may provide longer-form information suitable for the user's tendency, and by providing the user with information on the estimated total duration of the voice guidance, the user may anticipate the end time point of the voice guidance.

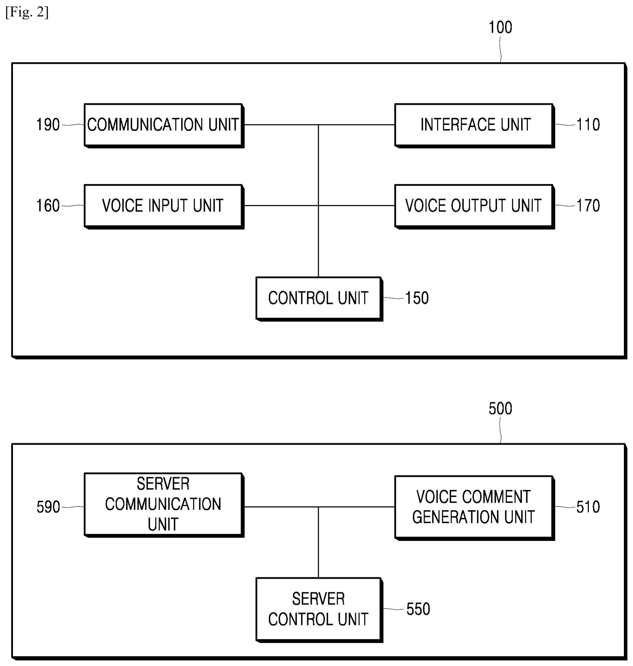

FIG. 2 is a view illustrating a configuration of the voice control device and a server according to one embodiment of the present invention. The voice control device 100 includes an interface unit 110, a control unit 150, a voice input unit 160, a voice output unit 170, and a communication unit 190. These are logical components, and some components may be configured as a single physical component.

The server 500 includes a server communication unit 590, a voice message generation unit 510, and a server control unit 550. These are logical components, and some components may be configured as a single physical component. When the server 500 generates a voice comment, the voice comment generation unit 510 may perform a process of converting a specific answer text into a voice comment.

In an embodiment of the present invention, some functions performed by the voice control device 100 may be performed by the server 500.

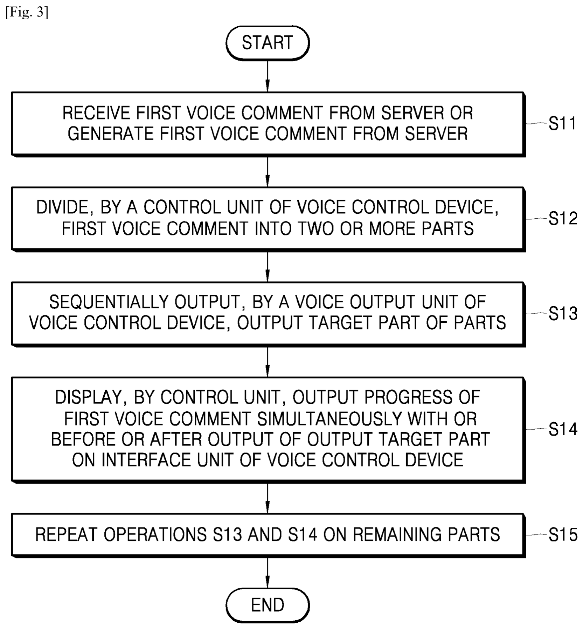

FIG. 3 is a view illustrating a control process of an interface unit for generating and outputting a voice comment by the voice control device according to one embodiment of the present invention.

The first voice comment to be output by the voice control device 100 is, for example, a voice comment received from the server. Alternatively, the voice control device 100 may independently generate a first voice comment. For example, the term "independently generating" refers to converting a specific string into the first voice comment, and the specific string may be, for example, a string received from an external source or previously stored by the voice control device 100. Alternatively, the voice control device 100 may generate a string.

First, the control unit 150 of the voice control device 100 divides the first voice comment into two or more parts (S11). Since the voice comment has a predetermined length, the part may be divided based on a length or based on a pause (a part without pronunciation) in the middle.

The part is an output unit of the voice comment, and the user may perceive that the voice comments are output continuously without distinguishing such parts. That is, the parts indicate logical divisions for the control unit 150 and the voice output unit 160 to output the voice comment.

In addition, the voice output unit 160 of the voice control device 100 performs a part output process of outputting an output target part among two or more parts in a predetermined order (S13).

In addition, the control unit 150 performs a displaying process of displaying the output progress of the first voice comment on the interface unit 110 of the voice control device 100 simultaneously with the output of the output target part or at a time point before or after the output of the output target part (S14).

Then, the control unit 150 controls the voice output unit 160 and the interface unit 110 to repeat the part output operation S13 and the display operation S14 for each part among the remaining parts after the output of the output target part according to the order of each part (S15).

According to the example of FIG. 3, since the voice control device 100 may display the output progress of the comment through the interface unit 110 while outputting the voice comment, a user listening to the voice comment may visually recognize how much time it takes for the voice comment to be fully output. The interface unit 110 may display the output end time of the voice comment using an light emitting diode (LED) display or numbers (e.g., a 7-segment).

The interface unit 110 of the voice control device 100 may be implemented in various shapes, such as a circle, rectangle, bar, and the like, and embodiments of the present invention are not limited to a specific shape. The user may estimate the time until the complete output of the voice comments based on the interface unit 110, in which the light visually increases or decreases, or the blinking rate varies.

In operation S11, the first voice comment may be received from the server 500 or directly generated by the control unit of the voice control device 100.

When receiving the first voice comment from the server 500, the server control unit 550 of the server 500 may generate the first voice comment to be transmitted to the voice control device 100. In addition, the process in which the server communication unit 590 transmits the first voice comment to the voice control device 100 and the communication unit 190 of the voice control device 100 receives the first voice comment may be performed before operation S12.

In addition, when the server generates and transmits the first voice comment, the server 500 may also calculate output time information required to output the first voice comment and transmit the output time information to the voice control device 100.

As a result, the display operation S14 may further include a process in which the control unit 150 controls the interface unit 110 using the output time information so that the interface unit 110 displays the output progress.

In the example of FIG. 3, the server 500 may divide the voice comment. For example, the server 500 may divide the first voice comment to be output by the voice control device 100 into multiple output target parts and transmit each of the output target parts to the voice control device 100. In this case, the voice control device 100 may sequentially output the received multiple output target parts.

For example, after the server control unit 550 of the server 500 divides the first voice comment into two or more parts, the server communication unit 590 may transmit the two or more divided parts to the voice control device 100. That is, the server 500 performs operations S11 and S12. Then, the voice control device 100 may perform operations S13 to S15.

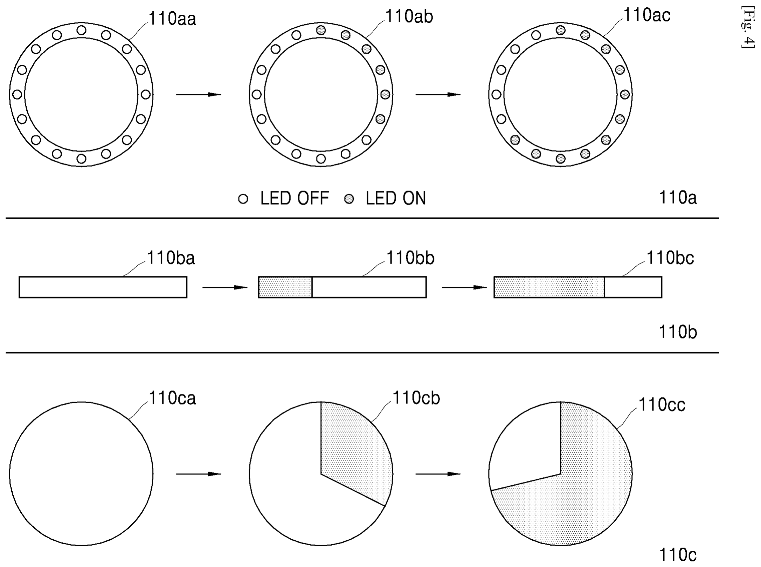

FIG. 4 is a view illustrating the interface unit of the voice control device according to one embodiment of the present invention.

110a shows a configuration in which LEDs disposed in a circle are turned on according to the output progress. In 110aa, each LED is in an off state, and during the output of the voice comment, the LEDs may be turned on under the control of the control unit 150, for example 110ab and 110ac, corresponding to the elapsed time, so that the user may visually check the remaining time. During the output of the voice comment, the proportion of LEDs that are turned on increases.

110b is an example that displays the output progress of the voice comment in the form of a progress bar. During the output of the voice comment in a state of 110ba, the output progress of the voice comment may be checked as in 110bb and 110bc.

110c is an example that displays the output progress of the voice comment in the form of a pie within the entire circle. During the output of the voice comment in a state of 110ca, the output progress of the voice comment may be checked as in 110cb and 110cc.

Referring back to FIG. 3, the voice comment may be divided into multiple parts based on the length of the voice file, the number of texts to be spoken, etc. The control unit 150 may display a length of the remaining time required to output the remaining parts of the voice comment after the output target part on the interface unit 110 of the voice control device. The remaining time may be calculated based on various criteria, such as the number of remaining characters, the size of the remaining file, etc.

Meanwhile, an output speed of a voice comment or part may be increased or decreased based on user tendency information. For example, when the user tendency information indicates a preference for fast voice comments, the voice control device 100 outputs the voice comments or parts in a short time. For example, assuming the actual time for outputting a voice comment or part is t_out, the voice control device 100 may output the voice comment in a short time, such as t_out*0.8, for users who prefer fast voice comments. This may be implemented through a function of outputting the voice comment at a faster speed (e.g., 1.2x, 1.5x, etc.).

Alternatively, the voice control device 100 or the server 500 may generate an audio file that constitutes the voice comment based on the user tendency information. For example, when the user tendency information indicates a preference for fast voice comments, the voice control device 100 may generate an audio file in which the same voice comment is pronounced at a faster speed and output the generated audio file.

Alternatively, the type of voice comment to be output may vary depending on the user tendency information. For example, when the user tendency information indicates a preference for short answers, the voice control device 100 may output a voice comment consisting of short answers. Conversely, when the user tendency information indicates a preference for detailed answers, the voice control device 100 may output a voice comment consisting of long answers.

To display the output progress of a voice comment or part on the interface unit 110, the control unit 150 may calculate output time information of the voice comment or part. To this end, the voice control device 100 may receive output time information from the server 500.

To summarize the above embodiment, the server 500 or the voice control device 100 may calculate the output time of the voice guidance comment (text-to-speech) generated according to the user's tendency or independently of the user's tendency and control the interface unit 110 according to the voice guidance comment time.

The voice control device 100 may control whether each LED of the circular LED blinks or the blinking speed as in 110a, the progress speed of the progress bar as in 110b, or the size of the pie to be displayed within the circle as in 110c.

For example, when the internal calculation result of the voice guidance comment time is 6 seconds or when 1 to 2 seconds have elapsed, the voice control device 100 may slow down a blinking speed of the entire circular LED and gradually control the blinking speed to be faster over time.

That is, when the interface unit 110 of the voice control device 100 is composed of LEDs or the like, the voice control device 100 may visualize the voice guidance time and change the number/area/speed of the LEDs turned on.

The internal calculation of the voice guidance comment time may be performed by the server 500 or the voice control device 100 based on the length of the text or the size of the voice guidance audio file to calculate the output time. When the server 500 calculates the output time, the server 500 may transmit the calculated output time information to the voice control device 100.

The server 500 or the voice control device 100 may calculate the output time based on the length of the text to be output as the voice comment. For example, the output time of the voice comment may be calculated as a y value by applying a linear function y=ax+b using the length of the text (number of characters) as x. For example, a is 0.1953, and b is 0.2578. Here, spaces within the text may be included in the length, but the present invention is not limited thereto.

For example, referring to Table 1, the output time for each voice comment file may be determined.

**[Table 1]**

| No. | File name of voice comment (Text.pcm) | Length of text (number of characters, including spaces) | Output time (seconds) |
|---|---|---|---|
| | | | y=0.1953x+0.2578 |
| 1 | Drying course start.pcm | 8 | 1.9 |
| 2 | Cold wave warning in effect.pcm | 9 | 2.1 |
| 3 | Standard wash course start.pcm | 10 | 2.3 |
| 4 | High fine dust level.pcm | 14 | 3.1 |
| 5 | Proceed with steam wash course.pcm | 16 | 3.4 |
| 6 | Please select fabric softener during rinse cycle.pcm | 25 | 5.1 |

Meanwhile, the server 500 or the voice control device 100 may calculate the output time based on the size of the voice guidance audio file. For example, a linear function y=cx may be applied to the size of the voice guidance audio file (in KB, x value) to calculate the output time of the voice comment as the y value. For example, c is 0.0256. Reference is made to Table 2.

**[Table 2]**

| No. | File name of voice comment (Text.pcm) | Size of audio file | Output time (seconds) |
|---|---|---|---|
| | | | y=0.0256 x |
| 1 | Drying course start.pcm | 83.5 | 1.9 |
| 2 | Cold wave warning in effect.pcm | 88 | 2.1 |
| 3 | Standard wash course start.pcm | 93.7 | 2.3 |
| 4 | High fine dust level.pcm | 109 | 3.1 |
| 5 | Proceed with steam wash course.pcm | 125 | 3.4 |
| 6 | Please select fabric softener during rinse cycle.pcm | 198.5 | 5.1 |

According to the example of FIG. 4, the voice control device 100 or the server 500 calculates and uses the estimated output time of the voice guidance comment, allowing the user to visually check the output progress of the voice guidance comment. The progress may be implemented through changes in areas, speeds, or the like of the turned-on LEDs, but the present invention is not limited thereto.

To calculate the output time, the server 500 or the voice control device 100 may calculate the estimated time using a linear function based on the length of the text of the voice guidance comment, the size of the audio file of the voice guidance comment, etc.

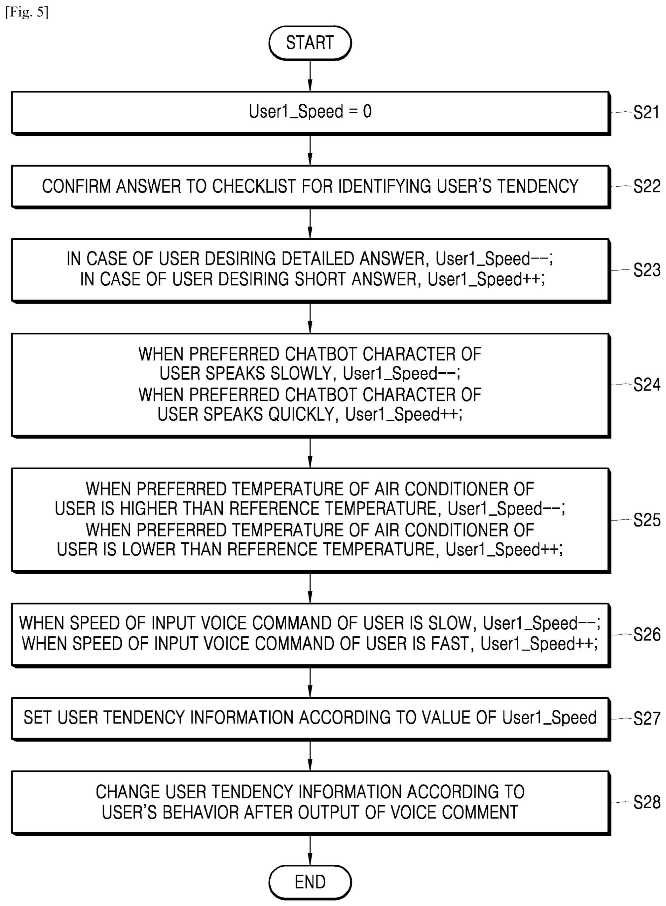

FIG. 5 is a view illustrating a process of adjusting an output speed of a voice comment using user tendency information according to one embodiment of the present invention. FIG. 5 illustrates a process of identifying tendency information of a new user.

The user tendency information is calculated based on information collected regarding the user's personality, tendency, and the like and may be calculated by the server 500 or the voice control device 100. In addition, the server control unit 550 of the server 500 or the control unit 150 of the voice control device 100 may use the user tendency information to select a voice comment suitable for the user tendency information among multiple voice comments.

The server control unit 550 of the server 500 or the control unit 150 of the voice control device 100 determines whether the corresponding user is a new user or an existing user to collect data corresponding to the user tendency information. When the user is a new user, the server control unit 550 of the server 500 or the control unit 150 of the voice control device 100 sets the value of User1_Speed to 0 to determine the user tendency information (S1). In addition, the server control unit 550 of the server 500 or the control unit 150 of the voice control device 100 checks the user's responses to a checklist for determining his or her tendency (S22). This answer is, for example, a value input by the user when first logging into the service.

Then, when the server control unit 550 of the server 500 or the control unit 150 of the voice control device 100 determines that the user desires a detailed answer based on the items checked by the user in the confirmed answer, the value of User1_Speed is decreased by 1 (User1_Speed--;). Conversely, when the server control unit 550 of the server 500 or the control unit 150 of the voice control device 100 determines that the user desires a simple answer based on the items checked by the user in the confirmed answer, the value of User1_Speed is increased by 1 (User1_Speed++;) (S23).

Next, based on the user's selected answer with the preferred chatbot character, the server control unit 550 of the server 500 or the control unit 150 of the voice control device 100 increases or decreases the value of User1_Speed depending on the tone of the chatbot character. For example, when the preferred chatbot character of the user speaks slowly, the value of User1_Speed is decreased by 1 (User1_Speed--;). Conversely, when the preferred chatbot character of the user speaks quickly based on the items checked by the user in the confirmed answer, the server control unit 550 of the server 500 or the control unit 150 of the voice control device 100 increases the value of User1_Speed by 1 (User1_Speed++;) (S24).

Moreover, in addition to the items checked by the user, the usage habits of the user for home appliances or the voice commands of the user may be analyzed to generate user tendency information.

For example, when a preferred air conditioner temperature of the user is higher than a reference temperature, the server control unit 550 of the server 500 or the control unit 150 of the voice control device 100 decreases the value of User1_Speed by 1 (User1_Speed--;) because the user may have a high heat tolerance. Conversely, when the preferred air conditioner temperature of the user is lower than the reference temperature, the server control unit 550 of the server 500 or the control unit 150 of the voice control device 100 increases the value of User1_Speed by 1 (User1_Speed++;) (S25).

In addition, when the voice command speed of the user is slow, the server control unit 550 of the server 500 or the control unit 150 of the voice control device 100 decreases the value of User1_Speed by 1 (User1_Speed--;). Conversely, when the input voice command speed of the user is fast, the server control unit 550 of the server 500 or the control unit 150 of the voice control device 100 increases the value of User1_Speed by 1 (User1_Speed++;) (S26).

The items in operations S23 to S26 are exemplary, and various determination criteria may be added. In addition, user tendency information may be set based on any one of the determination criteria in operations S23 to S26.

The server control unit 550 of the server 500 or the control unit 150 of the voice control device 100 sets user tendency information based on the value of User1_Speed accumulated up to S26 (S27). For example, when the value of User1_Speed is 2 or greater, it may be determined that the corresponding user desires a fast answer.

The example of FIG. 5 illustrates factors and logic to be implemented from a hyper-personalization perspective, in addition to factors for calculating the estimated voice guidance time for the user during the process of outputting a voice comment. That is, since the output speed of the voice comment determined based on the above conditions may change depending on the user's tendency, the estimated voice guidance time may vary depending on the changed output speed.

When the same voice guidance function is provided to all users regardless of their personalities or current emotional state, the users may exhibit reduced attention to the voice comment as it may not align with their individual tendencies. Accordingly, each criterion in FIG. 5 may be applied according to the user's tendency.

Each user may have different values set for their preferred AI chatbot. For example, depending on whether the item checked for the level of voice guidance explanation desired by the user is a "short answer explanation without detailed explanation" or a "detailed explanation," the server control unit 550 of the server 500 or the control unit 150 of the voice control device 100 may set the length of the voice comment to be output to the user, the output speed, or the type of answer differently.

Accordingly, the voice control device 100 may automatically reflect the user's individual personality, tendency, and the like and provide a voice guidance function optimized for the individual's personality.

In addition, the server control unit 550 of the server 500 or the control unit 150 of the voice control device 100 may automatically classify the user's personality using the voice commands and home appliance usage history of the user and match and set the chatbot personality that best matches the corresponding user's personality.

As a result, the server control unit 550 of the server 500 or the control unit 150 of the voice control device 100 provides the control of home appliances and personalized voice guidance functions based on the user's personality and the chatbot's personality.

The server control unit 550 of the server 500 or the control unit 150 of the voice control device 100 may provide the type, length, speed, tone, volume, and the like of the voice comment (voice guidance comment) in a personalized manner based on user tendency information.

For example, as in operation S25, the server control unit 550 of the server 500 or the control unit 150 of the voice control device 100 provides a user with an impatient personality who sets a temperature of an air conditioner to 18 °C, a heat level of an electric range to 10, or the like with the voice guidance at a fast speed.

In addition, voice command usage history and the like may be used by recognizing the user's personality. When the number of settings, such as a low-temperature air conditioner, a high-heat cooking apparatus, and the like, increases during the menu selection of the home appliance, the server control unit 550 of the server 500 or the control unit 150 of the voice control device 100 may provide the voice guidance at a fast speed.

In addition, commands or questions may be manually input in the format of text through an app (ThinQ app) installed on a user terminal (e.g., a smartphone, a tablet, or the like) linked to the home appliance, and during this process, the user may select items related to his or her personality.

For example, the user may select an MBTI type or a famous character (e.g., celebrity A, who is commonly known to have a quick-tempered personality, or celebrity B, who is known to have a laid-back personality) through the user terminal or select his or her own personality type (e.g., diplomat/manager/analyzer/explorer).

In addition, an SNS application installed on the user terminal (e.g., Facebook or Instagram) may be linked such that the user inputs his or her personality or tendency, and an input value is transmitted to the server 500 or the voice control device 100 to be used as user tendency information.

In this regard, when a proof of concept (PoC) is implemented, the server 500 or the voice control device 100 may be implemented in an embodiment that automatically recognizes the user's personality as follows. It is assumed that the user's name is "Younghee."

"The user, Younghee, is a friendly and humorous 25-year-old university student. She is very patient and enjoys chatting. She frequently uses an air conditioner and may seek assistance regarding related issues. In addition, she wants to engage in casual conversation for fun."

Such sentences may also be generated based on the example of FIG. 5. In addition, the above sentence may be an example of an output generated by inputting the input value in the example of FIG. 5 into a chatbot or a generative AI model.

According to the process of FIG. 5, the server 500 or the voice control device 100 may match and set the chatbot's personality suitable for the user's personality or tendency. That is, when multiple chatbots are present, the server 500 or the voice control device 100 may set a specific chatbot similar to the user's personality or tendency to process the voice command of the user.

In addition, the user may manually input a preferred chatbot personality via an application on the user terminal (e.g., ThinQ) or select one of multiple chatbots. The chatbot's personality may be described as, for example, encyclopedic, sociable, scientific, idea-oriented, or the like or as "detailed explanation" or "short answer explanation," and the user may directly select the desired personality. As a result, the server 500 or the voice control device 100 may generate a sentence describing a chatbot suitable for the user "Younghee" in response to the previously described sentence about the user and output the sentence as a voice comment or text.

"I am Lgenie, a personalized chatbot for the user Younghee, and I am a 33-year-old customer service assistant. Lgenie, known for being friendly and talkative, possesses a unique ability to explain complex concepts in an easily understandable manner. Each time the user says 'Hi LG,' Lgenie interprets it as a signal to start a new conversation or switch the current discussion topic. When faced with a question that it does not know the answer to, Lgenie responds honestly that it does not know."

According to such an example, a voice guidance function optimized for individual characteristics may be provided, and through user-customized provision, the user may use the voice recognition function more conveniently.

The example of FIG. 5 may be applied to existing users. However, since the existing users have the value of User1_Speed already calculated (e.g., 1, -2, or the like), operations S22 to S27 may be performed starting from the already calculated value. Of course, when the user selects the reset of the tendency information, the process may proceed in the order illustrated in FIG. 5.

Meanwhile, the server control unit 550 of the server 500 or the control unit 150 of the voice control device 100 may modify the user tendency information based on the user's behavior during the process of outputting the voice comments even after setting the user tendency information and determining the speed of the voice comments as in operation S27.

For example, when User1_Speed is set to -3 and a voice comment is output at a slow speed, but the user's behavior is detected by a home appliance or the like, such as leaving the seat while listening to the voice comment, or the user shouts "stop" during the process of outputting a long voice comment, and the user's behavior is inconsistent with the behavior set by the user tendency information, the server control unit 550 of the server 500 or the control unit 150 of the voice control device 100 may reset the user tendency information of the corresponding user or modify the value of User1_Speed.

When the user tendency information is set as illustrated in FIG. 5, the server control unit 550 of the server 500 or the control unit 150 of the voice control device 100 may increase or decrease the output speed of the output target part or the first voice comment in the part output operation of FIG. 3 using the user tendency information.

In addition, prior to the division operation S12, the server control unit 550 of the server 500 or the control unit 150 of the voice control device 100 may select the first voice comment among the first voice comment and a second voice comment using the user tendency information.

For example, when the user tendency information indicates a desire for a short answer at a fast speed, the server control unit 550 of the server 500 or the control unit 150 of the voice control device 100 may select the first voice comment for the short or summarized answer among the first voice comment for the short or summarized answer and the second voice comment for the long answer.

Alternatively, a chatbot may be selected based on the user tendency information. Among short-answer chatbots and detailed-answer chatbots, the server control unit 550 of the server 500 or the control unit 150 of the voice control device 100 may select a chatbot based on user tendency, receive an answer, and provide the answer as a voice comment.

For example, the server control unit 550 of the server 500 or the control unit 150 of the voice control device 100 may select one of the first voice comment consisting of short characters or the second voice comment consisting of long characters among two or more answers depending on the number of characters to be output as voice. That is, the first and second voice comments differ in the number of characters to be output as voice, and a voice comment with a short number of characters or a voice comment with a long number of characters may be selected based on the user's tendency.

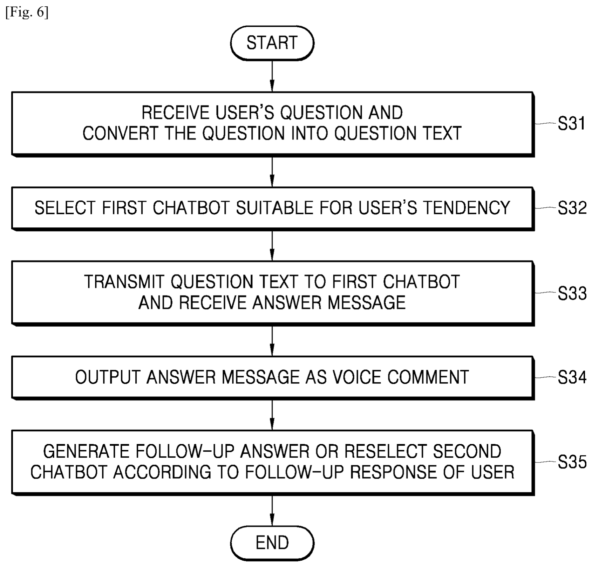

FIG. 6 is a view illustrating a process of selecting a chatbot based on a user's tendency according to one embodiment of the present invention.

For example, prior to operation S12 of FIG. 3, the voice input unit 160 of the voice control device 100 may receive the voice input of the user, and the control unit 150 may convert the user's voice into a question text (S31). In addition, the control unit 150 may use the user tendency information to select a chatbot (e.g., a first chatbot) to provide an answer to the question text (S32).

The communication unit 190 of the voice control device 100 transmits the question text to the selected chatbot (the first chatbot) and receives an answer message (S33). In addition, the control unit converts the answer message into the first voice comment and outputs the first voice comment (S34). Then, the control unit 150 may generate a follow-up answer or reselect a second chatbot different from the first chatbot based on the follow-up response of the user (S35). For example, the second chatbot is selected to provide a detailed answer when the user asks an additional question or inputs the voice command "Explain in detail" as the follow-up response of the user.

As another example, the second chatbot is selected to provide a short answer when the user leaves the chatbot during the response or inputs the voice command "Stop" as the follow-up response of the user.

The example of FIG. 6 may be applied to the server control unit 550 of the server 500. In an example in which the server control unit 550 selects a specific chatbot, the server control unit 550 uses the user tendency information to select the specific chatbot, transmits a question text corresponding to the voice command to the corresponding chatbot, and receives an answer message.

Since the server control unit 550 of the server 500 directly converts the answer message into a voice comment or transmits the answer message to the voice control device 100, the voice control device 100 may directly generate the voice comment. Operation S35 may be performed in response to information on the follow-up response of the user (e.g., seat movement, additional voice commands, or the like) transmitted by the home appliance or the voice control device 100.

Operations S31 to S33 include a process of converting the input voice command (voice file asking a question by voice) into a question text. When the chatbot may receive a voice question, the process of converting the voice question into the question text may be omitted, and the server 500 or the voice control device 100 may transmit the input voice command to the chatbot.

In addition, when the chatbot generates a voice answer, the server 500 or the voice control device 100 may output the voice answer received from the chatbot as a voice comment without converting the answer message into the voice comment.

According to the example of FIG. 6, the server 500 or the voice control device 100 may generate a voice recognition guidance comment (text-to-speech) suitable for the user's tendency.

Operations S31 to S33 of FIG. 6 may be performed by the server 500 or the voice control device 100. For example, the voice input unit 160 of the voice control device 100 may receive the voice input of the user, and the control unit 150 of the voice control device 100 may convert the user's voice into a question text (S31). In addition, the voice control device 100 may transmit the converted question text to the server 500.

The server control unit 550 may use the user tendency information to select a chatbot to provide an answer to the question text (S32), and the server communication unit 590 may transmit the question text to the selected chatbot and receive an answer message (S33). In addition, the server control unit 550 may convert the answer message into the first voice comment.

Next, an embodiment in which another home appliance outputs the output progress of the voice comment output by the interface unit 110 of the voice control device 100 will be described.

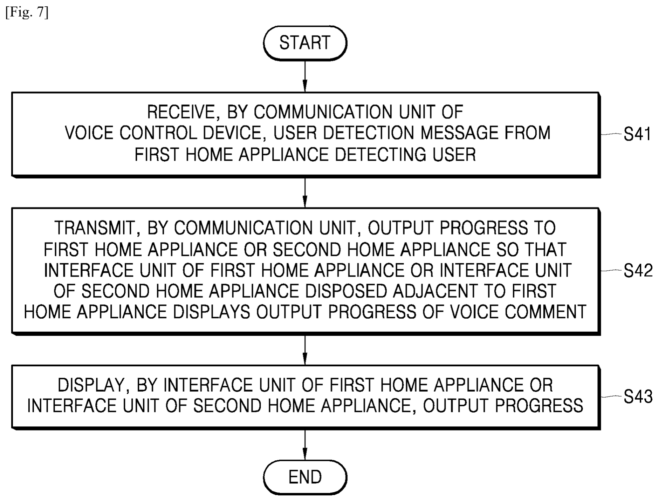

FIG. 7 is a view illustrating a process in which a home appliance adjacent to a user outputs a voice comment of the voice control device or displays an output progress of the voice comment according to one embodiment of the present invention.

FIG. 7 illustrates an embodiment in which the progress of voice recognition or voice comment output may be displayed via a large LED installed in a home appliance positioned in the same space as the user. The interface (an interface unit such as an LED) of the corresponding home appliance displays the output progress of the voice comment simultaneously with the voice control device 100, allowing the user to anticipate a time point at which the output of the voice comment is completed.

The user's position may be determined using occupancy sensors or the volume of sound input to a microphone of the home appliance or the voice control device 100. This will be described in detail.

The communication unit 190 of the voice control device 100 receives a user detection message from the first home appliance detecting a user (S41). The first home appliances include, for example, various home appliances capable of detecting the presence of a person in proximity, such as an air conditioner, a light, a water purifier, a TV, etc. Alternatively, each of the occupancy sensors (a motion sensor, an opening detection sensor, and a luminance sensor) may correspond to the first home appliance, and home appliances provided with the above sensors may also correspond to the first home appliance.

In addition, the communication unit 190 transmits an output progress message to the first home appliance or the second home appliance so that the interface unit of the first home appliance or the second home appliance disposed adjacent to the first home appliance displays the output progress of the voice comment (S42).

In this case, the second home appliance includes, for example, home appliances capable of visually transmitting information to the user, such as an air conditioner, a light, a TV, an infrared oven, etc.

Then, the interface unit of the first home appliance or the interface unit of the second home appliance displays the output progress of the voice comment (S43).

When any of the first home appliance, the second home appliance, or a third home appliance adjacent to the first home appliance includes a speaker, such a home appliance may output a voice comment.

The embodiment of the present invention may be implemented as follows. For example, among multiple home appliances including LEDs, a home appliance capable of providing information based on the user's position may detect the user's position.

For example, occupancy sensors (such as a motion sensor, an opening detection sensor, an illuminance sensor, and the like) linked to an app installed on a user terminal (e.g., a ThinQ app) may detect the user's position. In this case, the control unit 150 of the voice control device 100 or the server control unit 550 of the server 500 may select home appliances in a space in which the occupancy sensors detecting the user's position are installed. To this end, the app installed on the user terminal (e.g., the ThinQ app) may store position information of home appliances including LEDs and transmit this information to the voice control device 100 or the server 500.

That is, the control unit 150 of the voice control device 100 or the server control unit 550 of the server 500 may determine that the occupancy sensors have detected a user, select home appliances disposed at the detected position, and control the selected home appliances to output a voice comment or display the output progress according to the output of the voice comment.

For example, when the user is detected by a motion sensor (lighting) or an opening detection sensor (refrigerator) positioned in the kitchen, home appliances including LEDs registered as disposed in the kitchen may display the output progress according to the output of the voice comment to the user. The display method may employ the example of FIG. 4 based on the characteristics of the interface unit installed in the corresponding home appliance.

When the home appliances include LEDs and built-in microphones and the volume of the sound input to the microphone is a specific value or more, the control unit 150 of the voice control device 100 or the server control unit 550 of the server 500 determines that the user is positioned near the home appliances. As a result, the home appliance with the volume of the sound of the microphone being the specific value or more may display the output progress according to the output of the voice comment. Alternatively, when only the microphone is built-in and there is no LED, another adjacent home appliance with LEDs may display the output progress according to the output of the voice comment.

For example, when the volume of the sound input to a built-in microphone of a tower air conditioner is 60 dB or higher, the control unit 150 of the voice control device 100 or the server control unit 550 of the server 500 determines that the user is positioned near the tower air conditioner, selects the tower air conditioner as a home appliance for displaying the voice recognition and the output progress according to the output of the voice comment, and uses the built-in LEDs.

According to the example of FIG. 7, the control unit 150 of the voice control device 100 or the server control unit 550 of the server 500 may simultaneously display the progress of the voice recognition through a large LED mounted on a home appliance positioned in the same space as the user, simultaneously with the voice control device 100, by recognizing the space in which the user is present.

According to an extended example of FIG. 7, the voice control device 100 may identify other adjacent home appliances and control the identified home appliances to display the output progress according to the output of the voice comment.

In addition, when multiple home appliances are disposed in the space in which the user is present, the control unit 150 of the voice control device 100 or the server control unit 550 of the server 500 may preferentially select a home appliance with a large LED among these home appliances, thereby enhancing the visual effect when displaying the progress of the voice recognition.

Alternatively, when multiple home appliances are disposed in the space in which the user is present, the control unit 150 of the voice control device 100 or the server control unit 550 of the server 500 may preferentially select a home appliance with diverse LED colors among these home appliances, thereby enhancing the visual effect when displaying the progress of the voice recognition.

According to the embodiment of the present invention, the user may check the accurate voice recognition state and the voice comment output state when using the voice control device 100, thereby enhancing user experience (UX, User eXperience).

In addition, when the generator AI responds to a user's question, the voice guidance comment may be lengthy, and the user may visually check the output progress of the voice comments output by the voice control device 100 or home appliances, thereby enhancing user convenience.

In particular, according to the embodiment of the present invention, the voice control device 100 may provide a detailed or short explanation according to the user's tendency. In addition, the voice control device 100 may increase or decrease the voice output speed according to the user's tendency, thereby providing personalized services to the user.

That is, even for the same voice comment, the voice control device 100 may output the voice comment at a faster or slower speed according to the user's tendency. In addition, even for the same question, the voice control device 100 may provide a detailed explanation or a short/summary answer according to the user's tendency. In addition, the voice control device 100 may provide the user with a customized voice comment using information on the preferred voice, favorite celebrities, or the like set by the user.

The embodiment of the present invention may also be applied to voice recognition. However, since the end time may not be determined in voice recognition unless the user completes the sentence, the interface unit of the voice control device 100 may display that voice recognition is in progress.

According to the embodiment of the present invention, the voice control device 100, for example, a voice controller, may use the generative AI to generate a voice recognition guidance comment (text-to-speech) suitable for the user's tendency when responding to or responding to a voice recognition command, and internally calculate the voice guidance comment time. The voice control device 100 may control whether LEDs built into the voice control device 100 and a home appliance in the same space blink, or the blinking speed based on the time required to output the voice guidance comment (calculated time), thereby allowing the user to check the remaining time for the voice guidance comment output.

The voice control device 100 may control the home appliance to display the voice recognition and comment output progress simultaneously with the voice control device 100 using a large LED mounted on the home appliance disposed in the same space as the voice control device 100 or disposed adjacent to the user.

When providing voice guidance comment, the voice control device 100 automatically recognizes the user's personality, tendency, and the like and provides a voice guidance function optimized for the user's personality. Using the characteristics of voice commands, home appliance usage histories of the home appliances, and the like, parameters that automatically recognize or estimate the user's personality may be calculated, and the chatbot's personality that best matches the user's personality can be matched and set. The voice control device 100 provides home appliance control and personalized voice guidance functions based on the user's personality and the chatbot's personality.

Depending on the user's personality, the voice control device 100 may provide a short-answer explanation without detailed explanation or explanation with a detailed explanation.

For example, for a user set to the "short answer type" (type that provides a short-answer explanation without detailed explanation), an example of the voice guidance comment in response to the user's question is as follows.

User's question: "Soy sauce got on my clothes, please give me a laundry tip."

Voice guidance comment: "When soy sauce is stained on clothes, it is recommended to wash them without pretreatment. If additional answers are needed, please say <Continue> or <More>."

When the user says "Continue" at this point, the voice control device 100 may provide a detailed answer. In addition, when the user inputs a voice command requesting a detailed answer in subsequent questions, the voice control device 100 may set the user's tendency to a "type requesting detailed answers."

Conversely, when the user does not ask any further questions, the voice control device 100 maintains the corresponding user's tendency as a "type for providing short answers."

When the user is set to the "type for providing detailed answers," the voice control device 100 may output a detailed answer to the above question, including a quick treatment method, a detergent usage method, a washing machine course setting or a bleach usage method, entrusting to an expert, etc.

During this process, when the user says "Stop" or "Quit," the voice control device 100 stores the history of such voice command input. When the number of times the user interrupts the output of detailed voice comments with "Stop" or "Quit" is a predetermined reference or more, the voice control device 100 sets the type of the corresponding user to the "type for providing short answers" so that the user may listen to simplified explanations in the future.

According to the embodiment of the present invention, while outputting a voice guidance comment, the voice control device 100 may display the output state or the remaining time of the comment using an LED or the like so that the user may estimate the time when the voice guidance comment ends, thereby improving convenience of use.

In addition, the voice control device 100 may simultaneously display the output state or the remaining time of the comment through a large LED of a home appliance disposed in the same space as the voice control device 100 or in the same space as the user (e.g., an air conditioner, a TV, a refrigerator, or the like), enabling the user to easily check the progress of voice recognition and the comment output of the voice control device 100.

The voice control device 100 may automatically recognize the personality, tendency, and the like of the user or set an appropriate type of answer for the user. Based on this, the voice control device 100 may provide a voice guidance function optimized for the user's personality, thereby enabling the user to use the voice recognition function more effectively.

That is, according to the embodiment of the present invention, the voice control device 100 or the server 500 may automatically recognize the user's personality using voice commands and the usage histories of the home appliances of the user and set the chatbot's personality that best matches the user's personality. Accordingly, based on the user's personality and the chatbot's personality, the voice control device 100 or the server 500 may provide home appliance control and personalized voice guidance functions.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

### - DESCRIPTION OF REFERENCE NUMERALS-

10a, 10b, 10c, 10d: home appliance
100: voice control device
500: server

## Claims

1. A method for providing a user adaptive interface, comprising:
an operation of dividing, by a control unit of a voice control device, a first voice comment into two or more parts;
a part output operation of sequentially outputting, by a voice output unit of the voice control device, an output target part among the two or more parts;
a displaying operation of displaying, by the control unit, an output progress of the first voice comment on an interface unit of the voice control device simultaneously with or before or after the output of the output target part; and
an operation of controlling, by the control unit, the voice output unit and the interface unit to repeat the part output operation and the display operation for each part among the remaining parts in the order of each part after the output of the output target part.

2. The method of claim 1, wherein the displaying operation further includes an operation of displaying, by the interface unit, a length of a remaining time required to output the remaining parts of the first voice comment after the output target part.

3. The method of claim 1, wherein the part output operation further includes an operation of increasing or decreasing, by the control unit, an output speed of the output target part or the first voice comment using user tendency information.

4. The method of claim 1, further comprising, prior to the dividing operation, selecting, by the control unit, an operation of selecting the first voice comment among the first voice comment and the second voice comment using user tendency information.

5. The method of claim 4, wherein the first voice comment and the second voice comment differ in the number of characters to be output by voice.

6. The method of claim 1, comprising an operation of receiving, by a communication unit of the voice control device, a user detection message from a first home appliance detecting a user,
wherein the displaying operation further includes an operation of transmitting, by the communication unit, an output progress message to the first home appliance or a second home appliance and an operation of displaying, by an interface unit of the first home appliance or the second home appliance, the output progress so that the interface unit of the first home appliance or the second home appliance disposed adjacent to the first home appliance displays the output progress.

7. The method of claim 1, further comprising: prior to the dividing operation,
an operation of receiving, by a voice input unit of the voice control device, a voice input of a user and converting the user's voice into a question text;
an operation of selecting, by the control unit, a chatbot that will provide an answer to the question text using the user tendency information;
an operation of transmitting, by a communication unit of the voice control device, the question text to the selected chatbot and receiving an answer message; and
an operation of converting, by the control unit, the answer message into the first voice comment.

8. The method of claim 1, comprising: prior to the dividing operation,
an operation of generating, by a server control unit of a server, a first voice comment to be transmitted to the voice control device; and
an operation of transmitting, by a server communication unit of the server, the first voice comment to the voice control device so that a communication unit of the voice control device receives the first voice comment from the server.

9. The method of claim 8, wherein the receiving, by the communication unit, the first voice comment further includes an operation of receiving output time information required to output the first voice comment, and
the displaying operation further includes an operation of controlling, by the control unit, the interface unit using the output time information so that the interface unit displays the output progress.

10. A method for providing a user adaptive interface, comprising:
an operation of dividing, by a server control unit of a server, a first voice comment into two or more parts;
an operation of transmitting, by a server communication unit of the server, the divided two or more parts to a voice control device;
a part output operation of sequentially outputting, by a voice output unit of the voice control device, an output target part among the two or more parts;
a displaying operation of displaying, by a control unit of the voice control device, an output progress of the first voice comment on an interface unit of the voice control device simultaneously with or before or after the output of the output target part; and
an operation of controlling, by the control unit, the voice output unit and the interface unit to repeat the part output operation and the display operation for each part among the remaining parts in the order of each part after the output of the output target part.

11. The method of claim 10, wherein the displaying operation further includes an operation of displaying, by the interface unit, a length of a remaining time required to output the remaining parts of the first voice comment after the output target part.

12. The method of claim 10, wherein the part output operation further includes an operation of increasing or decreasing, by the control unit, an output speed of the output target part or the first voice comment using user tendency information.

13. The method of claim 10, further comprising, prior to the dividing operation, selecting, by the server control unit, an operation of selecting the first voice comment among the first voice comment and the second voice comment using user tendency information.

14. The method of claim 13, wherein the first voice comment and the second voice comment differ in the number of characters to be output by voice.

15. The method of claim 10, comprising an operation of receiving, by a communication unit of the voice control device, a user detection message from a first home appliance detecting a user,
wherein the displaying operation further includes an operation of transmitting, by the communication unit, an output progress message to the first home appliance or a second home appliance and an operation of displaying, by an interface unit of the first home appliance or the second home appliance, the output progress so that the interface unit of the first home appliance or the second home appliance disposed adjacent to the first home appliance displays the output progress.

16. The method of claim 10, further comprising: prior to the dividing operation,
an operation of receiving, by a voice input unit of the voice control device, a voice input of a user, converting the user's voice into a question text, and transmitting the question text to the server;
an operation of selecting, by the server control unit, a chatbot that will provide an answer to the question text using the user tendency information;
an operation of transmitting, by the server communication unit, the question text to the selected chatbot and receiving an answer message; and
an operation of converting, by the server control unit, the answer message into the first voice comment.

17. The method of claim 10, further comprising: prior to the dividing operation,
an operation of generating, by a server control unit of the server, a first voice comment to be transmitted to the voice control device; and
an operation of transmitting, by a server communication unit of the server, the first voice comment to the voice control device so that a communication unit of the voice control device receives the first voice comment from the server.

18. The method of claim 17, wherein the operation of receiving, by the communication unit, the first voice comment further includes an operation of receiving output time information required to output the first voice comment from the server, and
the displaying operation further includes an operation of controlling, by the control unit, the interface unit using the output time information so that the interface unit displays the output progress.

19. A voice control device for providing a user adaptive interface,
which provides voice recognition and a voice comment,
wherein a control unit of the voice control device divides a first voice comment into two or more parts, and then a voice output unit of the voice control device performs a part output process of sequentially outputting an output target part among the two or more parts,
the control unit performs a displaying process of displaying an output progress of the first voice comment on an interface unit of the voice control device simultaneously with or before or after the output of the output target part, and
the control unit controls the voice output unit and the interface unit to repeat the part output process and the displaying process for each part among the remaining parts in order of each part after the output of the output target part.

20. The voice control device of claim 19, wherein, during the displaying process, the interface unit displays a length of a remaining time required to output the remaining parts of the first voice comment after the output target part.

21. The voice control device of claim 19, wherein, during the part output process, the control unit increases or decreases an output speed of the output target part or the first voice comment using user tendency information.

22. The voice control device of claim 19, wherein the control unit selects the first voice comment among the first voice comment and the second voice comment using user tendency information and divides the first voice comment into two or more parts.

23. The voice control device of claim 22, wherein the first voice comment and the second voice comment differ in the number of characters to be output by voice.

24. The voice control device of claim 19, wherein a communication unit of the voice control device receives a user detection message from a first home appliance detecting a user, and
during the displaying process,
in order for the interface unit of the first home appliance or a second home appliance disposed adjacent to the first home appliance to display the output progress, the communication unit transmits an output progress message to the first home appliance or a second home appliance, and the interface unit of the first home appliance or the second home appliance displays the output progress.

25. The voice control device of claim 19, wherein a voice input unit of the voice control device receives a voice input of a user and converts the user's voice into a question text, and the control unit selects a chatbot to provide an answer to the question text using the user tendency information, and
a communication unit of the voice control device transmits the question text to the selected chatbot and receives an answer message, and the control unit converts the answer message into the first voice comment and divides the first voice comment into two or more parts.

26. The voice control device of claim 19, wherein a communication unit of the voice control device receives the first voice comment from a server generating the first voice comment.

27. The voice control device of claim 26, wherein the communication unit receives output time information required to output the first voice comment from the server, and
during the displaying process,
the control unit controls the interface unit using the output time information so that the interface unit displays the output progress.
